# EUROPÄISCHE PATENTANMELDUNG

(11) **EP 2 518 969 A1**
(43) Veröffentlichungstag der Anmeldung: **31.10.2012**
(21) Anmeldenummer: 11163959.7
(22) Anmeldetag: 27.04.2011
(51) Int. Cl.: H04L 29/06, H04L 12/24, G06F 21/00, G05B 19/00

(54) **Verfahren zum Betreiben einer Automatisierungseinrichtung**

(71) Anmelder: Siemens Aktiengesellschaft, 80333 München (DE)
(72) Erfinder: Palmin, Anna, 76187 Karlsruhe (DE); Kirchberg, Karl-Heinz, 76149 Karlsruhe (DE); Gummersbach, Jean-Luc, 76879 Knittelsheim (DE); Kobes, Pierre, Dr., 67470 Mothern (FR)

(57) **Zusammenfassung**

Es wird ein Verfahren zum Betreiben einer Automatisierungseinrichtung vorgeschlagen, die mindestens eine Automatisierungskomponente (1, 15) umfasst, welche Mittel zum Erfassen von sicherheitsrelevanten Ereignissen aufweist und welche über Kommunikationsmittel mit einem System (10) verbunden ist. Im Rahmen eines derartigen Verfahrens sind Maßnahmen vorgesehen, mittels welchen die Verarbeitung von sicherheitsrelevanten Ereignissen ermöglicht bzw. vereinfacht wird.

## Beschreibung

Die Erfindung betrifft ein Verfahren zum Betreiben einer Automatisierungseinrichtung, die mindestens eine Automatisierungskomponente umfasst, welche Mittel zum Erfassen von sicherheitsrelevanten Ereignissen aufweist und welche über Kommunikationsmittel mit einem System verbunden ist. Ferner betrifft die Erfindung eine zur Durchführung des Verfahrens geeignete Anordnung mit einem System und einer Automatisierungseinrichtung sowie eine Automatisierungseinrichtung für eine derartige Anordnung.

Aus der EP 1 398 937 A1 ist ein System zur Anzeige und/oder zum Erfassen eines Sicherheitsstatus eines Automatisierungsgerätes bekannt. Dazu weist das Automatisierungsgerät Mittel zum Feststellen seines Sicherheitsstatus auf, wobei das Automatisierungsgerät diesen Sicherheitsstatus mittels eines so genannten Simple Network Management-Protokolls (SNMP) einem Server übermittelt, welcher zur Anzeige des Sicherheitsstatus vorgesehen ist. Maßnahmen zur Verarbeitung von sicherheitsrelevanten Ereignissen (Security Events) sind nicht vorgesehen.

Der Erfindung liegt daher die Aufgabe zugrunde, ein Verfahren der eingangs genannten Art anzugeben, mittels welchem die Verarbeitung von sicherheitsrelevanten Ereignissen ermöglicht bzw. vereinfacht wird. Darüber hinaus ist eine Anordnung mit einem System und einer Automatisierungseinrichtung zu schaffen, welche zur Durchführung eines derartigen Verfahrens geeignet ist, und ferner eine Automatisierungseinrichtung für eine derartige Anordnung.

Diese Aufgabe wird im Hinblick auf das Verfahren durch die im Anspruch 1 angegebenen, in Bezug auf die Anordnung durch die im Anspruch 5 und bezüglich der Automatisierungseinrichtung durch die im Anspruch 8 angegebenen Maßnahmen gelöst.

Die Erfindung geht von der Idee aus, einen automatisierten Export von in Automatisierungskomponenten erfassten sicherheitsrelevanten Ereignissen an ein System, z. B. an einen Server, zu verwirklichen, wobei dieser Export ereignisgesteuert oder gemäß einer zyklischen Abfrage erfolgt.

Der Begriff "Automatisierungskomponente" ist in diesem Zusammenhang so auszulegen, dass er sämtliche Geräte umfasst, die zur Steuerung, Regelung und/oder Überwachung technischer Prozesse und/oder Anlagen geeignet bzw. zur Lösung von Automatisierungsaufgaben oder Teilen dieser Automatisierungsaufgaben vorgesehen sind. Derartige Geräte sind z. B. Steuerungen, wie speicherprogrammierbare Steuerungen oder Baugruppen für derartige Steuerungen, Prozessrechner, (Industrie-)Computer und dergleichen, auch Antriebssteuerungen, Feldgeräte, wie beispielsweise Sensoren und Aktuatoren.

Vorteilhaft ist, dass ohnehin vorhandene Mittel zur Diagnose einer Automatisierungskomponente, z. B. Kommunikations- bzw. Meldewege sowie Diagnosespeicher bzw. Diagnosepuffer von Automatisierungskomponenten, genutzt werden, um sicherheitsrelevante Ereignisse aufzubereiten. Im Rahmen dieser Diagnose werden zur Verwirklichung eines automatisierten Exports verschiedene, unter Berücksichtigung von diversen Anforderungen und Kriterien festzulegende sicherheitsrelevante Ereignisse zu einem Bestandteil der Detail-Diagnose dieser Automatisierungskomponente. Dazu werden sicherheitsrelevante Ereignisse zusammen mit anderen Störmeldungen oder sonstigen Meldungen im Diagnosespeicher bzw. Diagnosepuffer der Automatisierungskomponente hinterlegt. Als sicherheitsrelevante Ereignisse sind insbesondere folgende Ereignisse vorgesehen bzw. werden folgende Ereignisse festgelegt:
- ein Master-Passwort wurde nicht geändert,
- eine vorgegebene Benutzungsdauer für ein Passwort ist abgelaufen,
- eine Schreibverriegelung ist nicht aktiviert,
- eine Konfiguration der Automatisierungskomponente wurde geändert,
- eine Schutzstufe wurde geändert und/oder
- die Signatur eines Firmware-Updates wurde als ungültig erkannt.

In einer Ausgestaltung der Erfindung ist vorgesehen, dass mittels des Moduls der weiteren Automatisierungskomponente das ausgefilterte Ereignis oder die ausgefilterten Ereignisse in einer Security-Logdatei hinterlegt und einer ersten Schnittstelle des Systems übermittelt werden, welches als Security Information Event Management (SIEM)-System ausgebildet ist. Dabei wird der Inhalt der Security-Logdatei mittels dieser ersten Schnittstelle an ein Format des Security Information Event Management-Systems angepasst oder auf dieses Format abgebildet. Durch derartige Maßnahmen ist im Wesentlichen die Automatisierungskomponente, beispielsweise eine Automatisierungskomponente in Form einer speicherprogrammierbaren Steuerung oder eines intelligenten Feldgerätes, zur Lösung der eigentlichen Steuerungsaufgaben vorgesehen und von der Aufbereitung der sicherheitsrelevanten Ereignisse für den Export entlastet. Diese Aufbereitung übernimmt die weitere Automatisierungskomponente.

Gemäß einer weiteren Ausgestaltung der Erfindung werden mittels des Moduls der Automatisierungskomponente das ausgefilterte Ereignis oder die ausgefilterten Ereignisse mittels eines an sich bekannten Simple Network Management-Protokolls (SNMP) oder eines ebenfalls an sich bekannten Syslog-Protokolls einem SNMP-Trap-Receiver oder Syslog Server oder Syslog Receiver des als Security Information Event Management-System ausgebildeten Systems übermittelt. Neben der Verwirklichung der eigentlichen Steuerungsaufgaben bewerkstelligt die Automatisierungskomponente den Export der sicherheitsrelevanten Ereignisse, wodurch im Hinblick auf diesen Export auf eine weitere Automatisierungskomponente verzichtet werden kann.

Weitere vorteilhafte Ausgestaltungen der Erfindung ergeben sich aus den weiteren Unteransprüchen.

Anhand der Zeichnung, in der Ausführungsbeispiele der Erfindung veranschaulicht sind, werden im Folgenden die Erfindung, deren Ausgestaltungen sowie Vorteile näher erläutert.

Es zeigen in vereinfachter Darstellung:

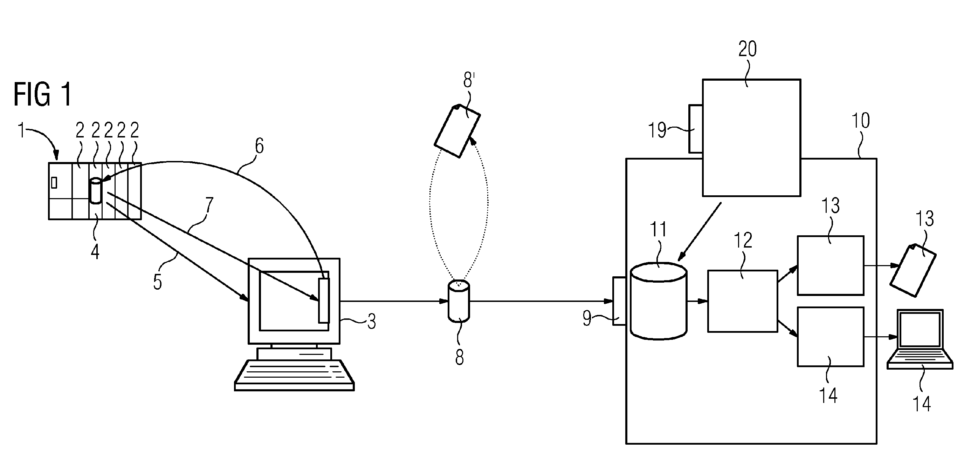

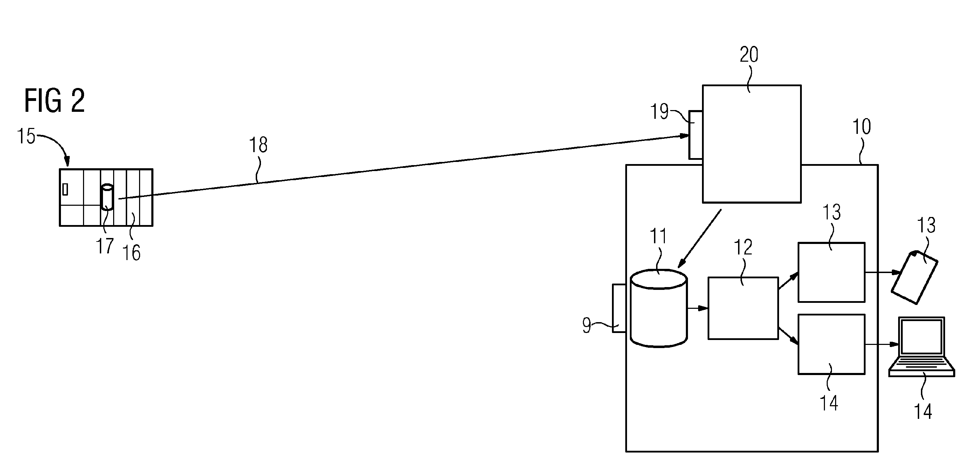

- Figuren 1 und 2: eine Anordnung mit einer Automatisierungseinrichtung und einem System.

Die in den Figuren 1 und 2 dargestellten gleichen Teile sind mit gleichen Bezugszeichen versehen.

In Figur 1 ist mit 1 ein mehrere Baugruppen 2 aufweisendes Automatisierungsgerät einer Automatisierungseinrichtung bezeichnet, welches über eine hier nicht dargestellte Busverbindung mit einem Engineering-System 3 dieser Automatisierungseinrichtung kommunikativ verbunden ist. Die Baugruppen 2 des Automatisierungsgerätes 1 sind als CPU-Baugruppe, Stromversorgungsbaugruppe sowie weitere für den Betrieb des Automatisierungsgeräts 1 erforderliche Peripherie-, Funktionssowie Kommunikationsbaugruppen ausgebildet, wobei die Baugruppen 2 über einen Rückwandbus oder über sonstige geeignete Verbindungen Informationen austauschen. Im vorliegenden Ausführungsbeispiel ist eine der Baugruppen 2 als Diagnosespeicher bzw. -puffer 4 ausgestaltet, in welchen an sich bekannte Diagnoseinformationen des Automatisierungsgerätes 1, z. B. Information in Form von Stör- und/oder Systemmeldungen und/oder Systeminformationen über den Ausbaugrad des Automatisierungsgerätes 1, und darüber hinaus sicherheitsrelevante Ereignisse hinterlegt sind. Selbstverständlich kann der Diagnosespeicher 4 auch Bestandteil der CPU-Baugruppe oder einer der weiteren Baugruppen des Automatisierungsgerätes 1 sein. Die sicherheitsrelevanten Ereignisse erfasst das Automatisierungsgerät 1 mittels geeigneter Hard- und Softwarekomponenten. Beispielsweise erfasst ein durch die CPU-Baugruppe verarbeitbarer Software-Funktionsbaustein, dass eine vorgegebene Benutzungsdauer für ein Passwort abgelaufen ist, und eine als Firewall ausgebildete Baugruppe erfasst einen unberechtigten Zugriffsversuch auf Komponenten des Automatisierungsgerätes 1 und/oder auf weitere mit dem Automatisierungsgerät 1 verbundene Automatisierungskomponenten.

Es wird angenommen, dass mittels eines Software-Funktionsbausteins des Automatisierungsgerätes 1 gerade ein sicherheitsrelevantes Ereignis erfasst wird. Aufgrund dessen hinterlegt der Software-Funktionsbaustein einerseits dieses Ereignis in den Diagnosespeicher 4 und zeigt andererseits dem Engineering-System 3 an, dass ein "neues" sicherheitsrelevantes Ereignis eingegangen ist, was in der Figur 1 mittels eines Pfeils 5 angedeutet ist. Diese Anzeige bzw. Signalisierung dient einem Software-Modul des Engineering-Systems 3 als "Auslöser", auf den Diagnoseinformationen aufweisenden Datenspeicher 4 zuzugreifen (Pfeil 6) und das dort hinterlegte sicherheitsrelevante Ereignis und ggf. auf dieses Ereignis folgende sicherheitsrelevante Ereignisse aus dem Datenspeicher 4 auszufiltern (Pfeil 7). In einem nächsten Schritt hinterlegt das Software-Werkzeug die ausgefilterten sicherheitsrelevanten Ereignisse in eine so genannte Security-Logdatei 8, welche einer Schnittstelle 9 eines Security Information Event Management-Systems (SIEM-System) 10 übermittelt wird. Selbstverständlich ist es möglich, zunächst alle im Diagnosespeicher 4 hinterlegten Diagnoseinformationen, welche sowohl die sicherheitsrelevanten als auch nicht sicherheitsrelevante Ereignisse umfassen, auszulesen, dann in einer Log-Datei abzuspeichern und schließlich die sicherheitsrelevanten Ereignisse aus den Diagnoseinformationen auszufiltern und in die Security-Logdatei 8 einzuschreiben. Die Schnittstelle 9 bildet das Format der Einträge der Security-Logdatei 8 auf das Format einer als SIEM-Security-Log bezeichneten Datenbank 11 des SIEM-Systems 10 ab, wobei diese angepassten Einträge in diese hinterlegt werden. Eine Auswerte- und Korrelationseinheit 12 des Systems 10 wertet die Einträge bzw. die dort hinterlegten sicherheitsrelevanten Ereignisse aus, um einem Anwender aussagekräftige Informationen über die Sicherheit bzw. über das Sicherheitsniveau des Automatisierungsgerätes 1 bzw. der Automatisierungseinrichtung anzuzeigen, wobei für die Anzeige geeignete Anzeige- und/oder Ausgabevorrichtungen 13, 14 vorgesehen sind. Im vorliegenden Ausführungsbeispiel ist ferner vorgesehen, dass die Security-Logdatei 8 kontinuierlich mittels eines Scripts 8' des Engineering-Systems 3 im Hinblick auf Änderungen des Inhalts der Security-Logdatei 8 überwacht wird. Dieses Script 8' kann in einer beliebigen Programmiersprache, z. B. in einer Programmiersprache in Form von Visual Basic, verwirklicht werden. Dadurch wird jedes neue sicherheitsrelevante Ereignis als eine Änderung der Security-Logdatei 8 erkannt und automatisch in die Datenbank 11 eingetragen.

Um im Hinblick auf einen Export von sicherheitsrelevanten Ereignissen auf das Engineering-System 3 bzw. auf eine weitere Automatisierungskomponente verzichten zu können, weist ein Automatisierungsgerät 15 (Figur 2) ein Modul 16 auf, welches dazu ausgebildet ist, aufgrund eines erfassten sicherheitsrelevanten Ereignisses einen Diagnoseinformationen aufweisenden Diagnosespeicher 17 auszulesen und die sicherheitsrelevanten Ereignisse auszufiltern. Ferner ist das Modul 16 dazu ausgebildet, das ausgefilterte Ereignis sowie die auf dieses Ereignis folgenden ausgefilterten Ereignisse mittels eines SNMP- oder eines Syslog-Protokolls 18 einem mit einer Schnittstelle 19 versehenen SNMP-Trap-Receiver oder Syslog Server oder Syslog Receiver 20 des als Security Information Event Management-System ausgebildeten Systems 10 zu übermitteln. Dieser SNMP-Trap-Receiver oder Syslog Server oder Syslog Receiver 20 passt das Format der übermittelten sicherheitsrelevanten Ereignisse an das Format der als SIEM-Security-Log bezeichneten Datenbank 11 des Systems 10 an. Die derart angepassten Ereignisse hinterlegt der SNMP-Trap-Receiver oder Syslog Server oder Syslog Receiver 20 in die Datenbank 11, auf die für die Auswertung und Weiterverarbeitung der Ereignisse die Auswerte- und Korrelationseinheit 12 zugreifen kann.

Gemäß der Erfindung wird ein ereignisgesteuerter oder zyklischer - z. B. nach Ablauf einer projektierbaren Überwachungszeit - automatisierter Export von sicherheitsrelevanten Ereignissen (Security Events) verwirklicht, die in Komponenten der industriellen Automatisierung erfasst werden. Alternativ zur Aufbereitung der Security Events in Form einer Logdatei für die Weiterverarbeitung durch ein SIEM-System kann auch direktes Melden der Security Events von Komponenten an das SIEM-System verwirklicht werden, wobei in diesem Fall die Komponenten mit einer SNMP- bzw. Syslog-Funktionalität erweitert werden.

Durch die Verwirklichung des ereignisgesteuerten automatisierten Exports von Security Events wird die Einbindung von Komponenten der industriellen Automatisierung, z. B. Komponenten in Form von intelligenten Feldgeräten oder speicherprogrammierbaren Steuerungen, in SIEM ermöglicht. Dies ist eine wichtige Voraussetzung für die Realisierung einer standardkonformen System-Lösung für das Security Event Information Management im Bereich der industriellen Automatisierung. Ferner bewirkt die vorgeschlagene Lösung eine deutliche Verbesserung der bestehenden Engineering-Tools bzw. der Komponenten der industriellen Automatisierung und der Security-Qualität der Automatisierungsanlagen.

## Patentansprüche

1. Verfahren zum Betreiben einer Automatisierungseinrichtung, die mindestens eine Automatisierungskomponente (1, 15) umfasst, welche Mittel zum Erfassen von sicherheitsrelevanten Ereignissen aufweist und welche über Kommunikationsmittel mit einem System (10) verbunden ist, mit folgenden Verfahrensschritten:
- nach dem Erfassen mindestens eines der sicherheitsrelevanten Ereignisse wird dieses Ereignis in einen Diagnosespeicher (4, 17) der mindestens einen Automatisierungskomponente (1, 15) hinterlegt,
- aufgrund des mindestens einen erfassten sicherheitsrelevanten Ereignisses oder aufgrund einer zyklischen Abfrage wird mittels eines Moduls der oder einer weiteren Automatisierungskomponente (3) der Diagnosespeicher (4, 17) ausgelesen und das mindestens eine der sicherheitsrelevanten Ereignisse ausgefiltert,
- mittels des Moduls wird das ausgefilterte mindestens eine sicherheitsrelevante Ereignis zum Übermitteln an das System (10) aufbereitet.

2. Verfahren nach Anspruch 1, **dadurch gekennzeichnet, dass** mittels des Moduls der weiteren Automatisierungskomponente (3) das ausgefilterte mindestens eine sicherheitsrelevante Ereignis in einer Security-Logdatei (8) hinterlegt und einer Schnittstelle (9) des Systems (10) übermittelt wird, welches als Security Information Event Management-System (10) ausgebildet ist, wobei der Inhalt der Security-Logdatei (8) mittels dieser Schnittstelle (9) an ein Format des Security Information Event Management-Systems (10) angepasst oder auf dieses Format abgebildet wird.

3. Verfahren nach Anspruch 1, **dadurch gekennzeichnet, dass** mittels des Moduls (16) der Automatisierungskomponente (15) das ausgefilterte mindestens eine sicherheitsrelevante Ereignis mittels eines SNMP- oder eines Syslog-Protokolls (18) einem SNMP-Trap-Receiver oder Syslog Server oder Syslog Receiver (20) des als Security Information Event Management-System (10) ausgebildeten Systems (10) übermittelt wird.

4. Verfahren nach Anspruch 2, **dadurch gekennzeichnet, dass** Änderungen des Inhalts der Security-Logdatei (8) von einem Script (8') überwacht werden.

5. Anordnung mit einem System und einer Automatisierungseinrichtung, die mindestens eine Automatisierungskomponente (1, 15) umfasst, welche Mittel zum Erfassen von sicherheitsrelevanten Ereignissen aufweist und welche über Kommunikationsmittel mit dem System (10) verbunden ist, wobei die Automatisierungseinrichtung dazu ausgebildet ist,
- nach dem Erfassen mindestens eines der sicherheitsrelevanten Ereignisse dieses Ereignis in einen Diagnosespeicher (4, 17) der mindestens einen Automatisierungskomponente (1, 15) zu hinterlegen,
- aufgrund des erfassten mindestens einen sicherheitsrelevanten Ereignisses oder aufgrund einer zyklischen Abfrage mittels eines Moduls der oder einer weiteren Automatisierungskomponente (3) den Diagnosespeicher (4, 17) auszulesen und das mindestens eine sicherheitsrelevante Ereignis auszufiltern,
- mittels des Moduls das ausgefilterte mindestens eine sicherheitsrelevante Ereignis zum Übermitteln an das System (10) aufzubereiten.

6. Anordnung nach Anspruch 5, **dadurch gekennzeichnet, dass**
- die Automatisierungseinrichtung ein Automatisierungsgerät (1) und ein Engineering-System (3) umfasst,
- das System (10) als Security Information Event Management-System (10) ausgebildet ist,
- das Modul Bestandteil des Engineering-Systems (3) ist, wobei das Engineering-System (3) das ausgefilterte mindestens eine sicherheitsrelevante Ereignis in einer Security-Logdatei (8) hinterlegt und einer Schnittstelle (9) des Systems (10) übermittelt,
- die Schnittstelle (9) den Inhalt der Security-Logdatei (8) an ein Format des Security Information Event Management-Systems (10) anpasst oder auf dieses Format abbildet.

7. Anordnung nach Anspruch 5, **dadurch gekennzeichnet, dass**
- die Automatisierungseinrichtung ein Automatisierungsgerät (15) umfasst,
- das System (10) als Security Information Event Management-System (10) ausgebildet ist,
- das Modul (16) Bestandteil des Automatisierungsgerätes (15) ist, wobei das Modul (16) dazu ausgebildet ist, das ausgefilterte mindestens eine sicherheitsrelevante Ereignis mittels eines SNMP- oder eines Syslog-Protokolls (18) einem SNMP-Trap-Receiver oder Syslog Server oder Syslog Receiver (19) des als Security Information Event Management-System (10) ausgebildeten Systems (10) zu übermitteln.

8. Automatisierungseinrichtung für eine Anordnung nach einem der Ansprüche 5 bis 7, wobei die Automatisierungseinrichtung mindestens eine Automatisierungskomponente (1, 15) umfasst, welche Mittel zum Erfassen von sicherheitsrelevanten Ereignissen aufweist und welche über Kommunikationsmittel mit einem System (10) verbunden ist, wobei die Automatisierungseinrichtung dazu ausgebildet ist,
- nach dem Erfassen mindestens eines der sicherheitsrelevanten Ereignisse dieses Ereignis in einen Diagnosespeicher (4, 17) der mindestens einen Automatisierungskomponente (1, 15) zu hinterlegen,
- aufgrund des erfassten mindestens einen sicherheitsrelevanten Ereignisses oder aufgrund einer zyklischen Abfrage mittels eines Moduls der oder einer weiteren Automatisierungskomponente (3) den Diagnosespeicher (4, 17) auszulesen und das mindestens eine sicherheitsrelevante Ereignis auszufiltern,
- mittels des Moduls das ausgefilterte mindestens eine sicherheitsrelevante Ereignis zum Übermitteln an das System (10) aufzubereiten.

9. Automatisierungseinrichtung nach Anspruch 8, **dadurch gekennzeichnet, dass**
- die Automatisierungseinrichtung ein Automatisierungsgerät (1) und ein Engineering-System (3) umfasst,
- das Modul Bestandteil des Engineering-Systems (3) ist, wobei das Engineering-System (3) das ausgefilterte mindestens eine sicherheitsrelevante Ereignis in einer Security-Logdatei (8) hinterlegt und einer Schnittstelle (9) des Systems (10) übermittelt,
- die Schnittstelle (9) den Inhalt der Security-Logdatei (8) an ein Format eines als Security Information Event Management-Systems (10) ausgebildeten Systems (10) anpasst oder auf dieses Format abbildet.

10. Automatisierungseinrichtung nach Anspruch 9, **dadurch gekennzeichnet, dass**
- die Automatisierungseinrichtung ein Automatisierungsgerät (15) umfasst,
- das Modul (16) Bestandteil des Automatisierungsgerätes (15) ist, wobei das Modul (16) dazu ausgebildet ist, das ausgefilterte mindestens eine sicherheitsrelevante Ereignis mittels eines SNMP- oder eines Syslog-Protokolls (10, 18) einem SNMP-Trap-Receiver oder Syslog Server oder Syslog Receiver (19) eines als Security Information Event Management-System (10) ausgebildeten Systems (10) zu übermitteln.
